# EUROPEAN PATENT APPLICATION

(11) **EP 2 316 263 A1**
(43) Date of publication of application: **04.05.2011**
(21) Application number: 09174881.4
(22) Date of filing: 03.11.2009
(51) Int. Cl.: A01K 31/18

(54) **Broiler house and method of rearing a broiler**

(71) Applicant: Huizing, Jacob, 46446 Emmerich (DE)
(72) Inventor: Huizing, Jacob, 46446 Emmerich (DE)
(74) Representative: Swinkels, Bart Willem

(57) **Abstract**

The invention relates to a broiler house for rearing a young broiler chicken. The broiler house comprises a first compartment arranged for receiving young broiler chickens, a second compartment arranged for rearing broilers, and a lockable passage between the first and second compartment through which broiler chickens can pass through from the first compartment to the second compartment.

## Description

### TECHNICAL FIELD OF THE INVENTION

The invention relates to a broiler house comprising a first compartments for receiving young broiler chickens. The invention further relates to a method of rearing a young broiler chicken for a predefined period.

### BACKGROUND OF THE INVENTION

At present, young broiler chickens are reared in one compartment until they reach the desired weight. This will normally be after a predefined period of 6 weeks. There are regulations which require that the maximum stocking density in a holding or a house of a holding does not at any time exceed a prescribed amount of kg/m². Consequently, the number of young broiler chickens to start with, assuming no chickens will die or will be removed during the rearing period, is defined by the average weight at the end of the period. As a consequence, the meat producing efficiency of the floor area increases up to its maximum at the end of the predefined period.

Furthermore, new regulations will come with reduced maximum stocking density in a holding or a house of a holding. As a consequence, the maximum number of broiler chickens in existing broiler houses will decrease and less meat can be produced in said broiler house. A farmer has a license to hold a maximum number of chickens. To rear said maximum number of chickens, the farmer has to increase the size of his broiler house or build an additional broiler house. This will be an expensive operation.

### SUMMARY OF THE INVENTION

The object of the invention is to provide an improved broiler house in which young broiler chickens can be reared more economically.

It's an object of the invention to provide a broiler house with improved production capacity per m². It's an further object of the invention to provide a broiler house which allows to implement a method of rearing of broilers with at least one of the following advantageous: reduced risk of infection by germs in the litter, reduced costs of ground cover material, with reduced energy costs, reduces risk of infection of stock by pathogens by air.

According to the invention, this object is achieved by a broiler house having the features of Claim 1. Advantageous embodiments and further ways of carrying out the invention may be attained by the measure mentioned in the dependent claims.

According to the invention, a broiler house according to the invention comprises a first compartment arranged for receiving young broiler chickens, a second compartment arranged for rearing broilers, and a lockable passage between the first and second compartment through which broiler chickens can pass through from the first compartment to the second compartment.

The invention is based on the recognition that at the beginning of the rearing period the stocking density is far below the maximum allowed stocking density. By having at least two compartments and using said compartments subsequently for a proportional part of the rearing period, each compartment could be dimensioned such that at the end of the associated part of the rearing period the stocking density is about the maximum allowed stocking density. As each compartment is used for a similar amount of time, the compartments could be used simultaneously with live stock. After the stock is moved from the first to second compartment and the second compartment is emptied, the compartment has to be disinfected. This takes one week , in which no chickens are in the compartment. Consequently, one of the four weeks no chickens are in a compartment, whereas in a conventional broiler house one of the seven weeks the broiler house is empty. Thus on average the percentage the broiler house is not in use with two compartments according to the invention is higher than in a broiler house with only one compartment. However, in spite of the less effective use in time of the floor area due to disinfecting, it has been found that the amount of broiler chickens that can be reared over a period of time, for example one year, with the same floor area of broiler house increases by using two compartments.

In an embodiment of the invention, the first and second compartment has a first floor area and second floor area respectively, wherein the first floor area is smaller then the second floor area.

In an embodiment of the invention, the young broiler are reared in the first compartment for a predefined period of time and the first floor area and second floor area are in a proportion of at least the average weight of a broiler halfway the predefined period to the average weight of a broiler at the end of said predefined period. This embodiment provides the most efficient use of the area of the broiler house.

In an embodiment of the invention, the broiler house further comprises quarantine means to quarantine the first compartment from the second compartment. This feature reduces the risk of infection of the chickens which as a consequence will result in a better yield as the chickens in the second compartment could not infect the chickens in the first compartment.

In an embodiment, the quarantine means comprises an air facility to provide an air-pressure difference between the first compartment and the second compartment. Preferably, the air facility is arranged to provide the first compartment with an air pressure which is higher than the air pressure in the second compartment. In this way, the air from the second compartment which has a higher chance to carry infections than the air in the first compartment, is prevented to flow in to the first compartment.

In another embodiment, the quarantine means comprises the lockable passage and an air facility to provide an air-pressure in the lockable passage which is higher then the air pressure in both the first compartment and the second compartment. This embodiment has the advantage that the air pressure in the compartments could be equivalent.

In an embodiment, only the first compartment comprises a floor heating system. This feature reduces the costs for building a broiler house.

In an embodiment, the broiler house further comprises a heat exchanger for exchanging heat between the first and second compartment. This feature enables to reduce the heating costs by using the heath production from the older chickens in the second compartment to heat the first compartment, which needs a higher room temperature than the second compartment.

In an embodiment, the broiler house further comprises a luring arrangement to lure the broiler chickens from the first compartment to the second compartment. In this way, the chickens will move in own motion from the first compartment to the second compartment, which will reduce stress and unnecessary activity of the chickens.

In an embodiment, the broiler house further comprises an air supply unit with an inlet which is at a height that is at least twice the height of the first and second compartment, wherein the air supply unit is arranged to supply air to at least the first compartment. These features also reduces the risk of infections an diseases. These features also allows to omit expensive air filters or cleaning devices. By having an inlet of fresh air far away from the compartments, the possibility that diseases or infections in the air coming from the compartments or broiler houses will be supplied to the first compartment is reduced significantly. In combination with a lockable passage with a higher air pressure than in the compartments, this allows to have the same air pressure in both compartments, wherein the air supply unit supplies fresh air to both compartments.

In an embodiment, the first compartment and the second compartment has approximately the same amount of drinker nipples.

In an embodiment, the first compartment comprises more conveyer belts for feeding the chickens per square meter than the second compartment. Despite of the smaller size of the chickens in the first compartment than the second compartment, it has been found that more conveyer belts per square meter are needed to feed the chickens.

Another object of the invention is to provide an improved method of rearing young broiler chickens in a predefined period. The method comprises the steps of:
a) providing a broiler house having the technical features of a broiler house according to the invention;
b) receiving broiler chickens which are one, two, three or four-days old in a first compartment of the broiler house;
c) rearing the broiler chickens for a period which is half the predefined period in the first compartment;
d) moving the broiler chickens from the first compartment to a second compartment of the broiler house though a lockable passage between the first and the second compartment wherein;
e) rearing the broiler chickens for a period which is half the predefined period in the first compartment;
f) transporting the broiler chickens from the second compartment to a slaughterhouse at the end of the predefined period.

It will be clear that the various aspects mentioned in this patent application may be combined and may each be considered separately for a divisional patent application. Other features and advantages of the invention will become apparent from the following detailed description, taken in conjunction with the accompanying drawing which illustrate, by way of example, various features of preferred embodiments of the invention.

### BRIEF DESCRIPTION OF THE FIGURES

These and other aspects, properties and advantages of the invention will be explained hereinafter based on the following description with reference to the drawings, wherein like reference numerals denote like or comparable parts, and in which:
Figure 1 illustrates a floor plan of a broiler house according to the invention;
Figure 2 illustrates an embodiment of a broiler house according to the invention; and,
Figure 3 shows an embodiment of an climate control system in a broiler house according to the invention.

### DESCRIPTION OF EMBODIMENTS

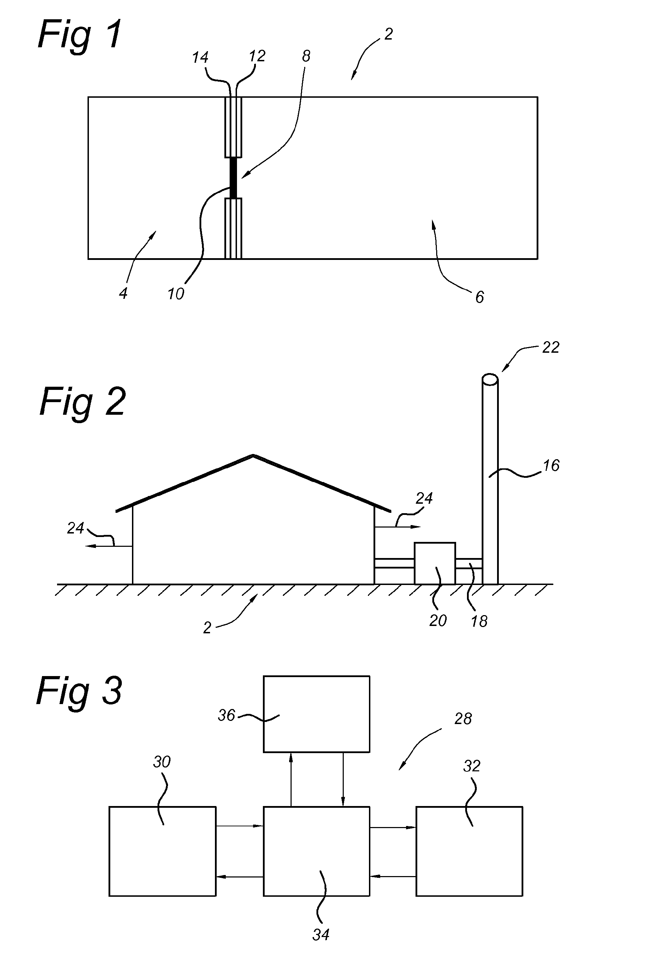

Figure 1 illustrates a floor plan of a broiler house 2 according to the invention. The broiler house 2 comprises a first compartment 4 and a second compartment 6. Between the first and second compartment a partition 12 is provided to separate the first and second compartment 4,6. A lockable passage 8 is provided to move chickens from the first compartment 4 to the second compartment. In the present embodiment the lockable passage 8 is an opening in the partition 12. A door system 10 is provided to open or close the passage 8. De door system 10 could be any suitable door system to close the passage between the firt and second compartment and could comprise one or more individual doors.

The first compartment 2 is used to receive young broilers and to rear them for a period with is half of the time to rear a young chicken to a meat chicken. Young broilers of young broiler chickens when they are received in the broiler house are chickens which can be day-old chickens or chicken of two, three or four days old. After this period, the chickens are moved to the second compartment 6 to rear the chicken for the remaining rearing period. A commonly used period for rearing a broiler is six weeks. Consequently a broiler will stay three weeks in the first compartment and three weeks in the second compartment.

Regulations prescribe the maximum stocking density. For example in the Council Directive 2007/43/EC of 28 June 2007, a maximum stocking density of 33 3 kg/m² is prescribed. The weight of a 21 day old broiler chicken is about 860 gram and the weight of a 42 day old broiler chicken is about 2500 gram. Assuming that all chickens will stay alive, the ratio of the area of the first compartment and the area of the second compartment is 860:2500. With this ratio the same amount of chickens can simultaneously be reared in the first and second compartment. There are farmers that take away a percentage of 25% at day 35 day from the second compartment. At day 35, the weight of a broiler chicken is about 1900 gram. With an increase of 600 gram in the last week, the stocking density of the remaining 75% of chickens is still below the maximum stocking density. As a consequence, the ratio of the area of the first compartment and the area of the second compartment changes to 860:1900. For both ratios, the floor area of the first compartment is smaller than the floor area of the second compartment.

It is of importance that the risk of infection is reduced as much as possible. The older the chickens, the more chance they are infected. However, the older an healthy chicken the less chance he will die owing to the effect of infection before the end of the six week rearing period. Infection can take place via the air. Therefore, the broiler house 2 comprises quarantine means to quarantine the first compartment from the second compartment. The quarantine means ensure that the air in the second compartment can not flow to the first compartment. In an embodiment of the invention, the quarantine means comprises an air facility to provide an air-pressure difference between the first and the second compartment, wherein the air-pressure in the first compartment is higher than the air-pressure in the second compartment. The air facility should be arranged such that air supplied to the first compartment does not comprise infections. This could be done by means of air cleaners in the air facility.

Figure 2 shows an embodiment of a broiler house comprising an air facility which supplies sufficient clean air to a compartment of the broiler house in which special air cleaners to clean the air from infections are not essential. In this embodiment, a chimney 16 is used to suck in fresh air from far above ground level. Far above means at least two times the height of the broiler house 2. The height could be in the range of 12 - 30 meters. It has been found that the risk of infections above said height is far below the risk of infections at ground level. A fan unit 20 is used to suck the fresh air 22 in to the inlet of the chimney 16 and to transport the fresh air via air ducts 18 to the first compartment 4. Instead of a chimney 16 the tower of a wind turbine could be used as air duct to obtain the fresh air from far above the broiler house. In that case, the wall of the tower comprises in the top end of the tower openings to suck in fresh air. In a further embodiment, the fan unit 20 and chimney 16 is also used to supply fresh air to the second compartment 6. In that case, the fan unit 20 comprises a controller (not shown) which controls that the air pressure in the first compartment 4 is higher than the air-pressure in the second compartment. Reference signs 24 represent the air flowing out of the first and/or second compartment 4,6. The natural wind or air flow will ensure that the air 24 coming from the broiler house 2 and possibly comprising infections will be sucked in by the inlet of the chimney 16. Optionally, the air facility comprises a air filter unit to remove germs from the air flow. Furthermore, the incoming fresh air could be heated or cooled by a heat exchanger which is part of a temperature control system, which will be described below in more detail.

In another embodiment, the quarantine means to ensure that air from the second compartment flows in to the first compartment is build in the lockable passage 8 and partition 12. The air facility ensures that the air-pressure in the passage 8 is higher than the air pressure in both the first and second compartment 4,6. Consequently, air supplied to the lockable passage 8 flows along the door 10 to the first or second compartment 4,6. In this way, there cannot be an airflow via the lockable passage 8 from the first compartment 4 to the second compartment 6 or reverse. The lockable passage 8 could be in the form of an air lock with two shutters, one at each side of the air lock. The lockable passage 8 could also be in the form of a sliding door build in a cavity wall. In the latter case, one should take care that at the lower side of the door no air can flow from one side of the door to the other side of the door. This could be accomplished by antidraft features commonly known to the skilled person. In figure 1 a cavity wall 12 is shown with a cavity 14 between the two walls of the cavity wall 12. The air facility is arranged to provide in the cavity an air pressure which is higher than the air pressure in the first compartment 4 and the second compartment 6.

During rearing a broiler chicken, the optimal temperature in the broiler house decreases from 34°C at day 1 to 24°C at day 21 and to 20°C at day 42. The curve of the optimal temperature over the whole period is known to the person skilled in the art. Therefore, the first compartment needs more heating capacity than the second compartment. An underfloor heating system is preferably provided in the first compartment. Alternative or optionally heating lamps or other heating systems could be installed in the first compartment. Depending on the environmental conditions of the broiler house, a heating system has to be installed in the second compartment.

Under normal environmental conditions in the Netherlands, the chickens in the second compartment produces more heat than needed to keep the temperature at the optimal temperature in the range of 20 - 24°C. Therefore, a heat exchanger is installed for exchanging heat between the first and second compartment, more particular to extract heat from the second compartment to cool the second compartment and the supply heat to the first compartment by supplying the heat to the underfloor heating system.

Figure 3 shows a block diagram of a temperature control system 28 fur use in a broiler house with a first and second compartment according to the invention. The temperature control system comprises an underfloor heating system 30, a control unit 34, a heat exchanger 32 installed in the second compartment, a heat exchanger 36 installed in the air facility described above. The heat exchanger 32 could be installed in the ventilation openings of the broiler house. The heated air flow leaving the broiler house is extracted from the air to cool the air. In this way, heat can be extracted from air leaving both the first and second compartment. The extracted heat is transported to the control unit 34 by means of a fluid, for example water or refrigerant. The control unit 34 comprises a heat pump, which extracts the heat from the fluid and heats up the water for the underfloor heating system in the first compartment. The fluid could also be supplied to the heat exchanger in the air facility to heat up fresh air in case the air outside the broiler house is colder than the required optimal air temperature in the first and or second compartment of the broiler house. The combination of heat pump part of the control unit 34 and heat exchanger 32 could be in the form of an air source heat pump. The require techniques to provide a temperature control system 28 for use in a broiler house with a first and second compartment is known to the person skilled in the art. By means of the temperature control system 28, the energy cost to rear broiler chickens can be reduced as the heat generated by the chickens in the second compartment is used to heat-up the room temperature in the higher optimal room temperature in the first compartment rearing the young chickens.

It should further be noted that as the density of broiler chickens in the first compartment is higher than the density of broiler chickens in the second compartment, the density of drinker nipples in the first compartment is higher than the density of drinker nipples in the second compartment. The density is defined as the amount of drinker nipples per square meters. However, the amount of drinker nipples in the first compartment is approximately the same as the amount of drinker nipples in the second compartment. Furthermore, the first compartment comprises more conveyer belts for feeding the chickens per square meter than the second compartment. Despite of the smaller size of the chickens in the first compartment, more length of conveyer belts per square meter are needed to feed the chickens.

The measures described hereinbefore for embodying the invention can obviously be carried out separately or in parallel or in a different combination or if appropriate be supplemented with further measures; it will in this case be desirable for the implementation to depend on the field of application. The broiler house could for example also be used to rear laying hens. The invention is not limited to the illustrated embodiments. Changes can be made without departing from the idea of the invention. The idea of using the tower of a wind turbine to obtain fresh air with reduced risk of supplying infected air to the livestock could be used in any type of livestock farm.

## Claims

1. Broiler house for rearing a young broiler chicken, wherein the broiler house comprises a first compartment arranged for receiving young broiler chickens, **characterized in that**,
the broiler house further comprises a second compartment arranged for rearing broilers, and a lockable passage between the first and second compartment through which broiler chickens can pass through from the first compartment to the second compartment.

2. Broiler house according to claim 1, wherein the first and second compartment has a first floor area and second floor area respectively, wherein the first floor area is smaller then the second floor area.

3. Broiler house according to claim 2, wherein the young broiler are reared for a predefined period of time and the first floor area and second floor area are in a proportion of at least the average weight of a broiler halfway the predefined period to the average weight of a broiler at the end of said predefined period.

4. Broiler house according to any of the claims 1 - 3, wherein the broiler house further comprises quarantine means to quarantine the first compartment from the second compartment.

5. Broiler house according to claim 4, wherein the quarantine means comprises an air facility to provide an air-pressure difference between the first compartment and the second compartment.

6. Broiler house according to claim 5, wherein the air facility is arranged to provide the first compartment with an air pressure which is higher than the air pressure in the second compartment.

7. Broiler house according to claim 4, wherein the quarantine means comprises the lockable passage and an air facility to provide an air-pressure in the lockable passage which is higher then the air pressure in both the first compartment and the second compartment.

8. Broiler house according to any of the claims 1 - 7, wherein only the first compartment comprises an underfloor heating system.

9. Broiler house according to any of the claims 1 - 8, wherein the broiler house further comprises a heat exchanger for exchanging heat between the first and second compartment.

10. Broiler house according to any of the claims 1 - 9, wherein the broiler house further comprises an air supply unit with an inlet which is at a height that is at least twice the height of the first and second compartment, wherein the air supply unit is arranged to supply air to at least the first compartment.

11. Method of rearing young broiler chickens in a predefined period, wherein the method comprises the steps of:
a) providing a broiler house according to any of the claims 1 - 10;
b) receiving broiler chickens which are one, two, three or four days old in a first compartment of the broiler house;
c) rearing the broiler chickens for a period which is half the predefined period in the first compartment;
d) moving the broiler chickens from the first compartment to a second compartment of the broiler house though a lockable passage between the first and the second compartment wherein;
e) rearing the broiler chickens for a period which is half the predefined period in the first compartment;
f) transporting the broiler chickens from the second compartment to a slaughterhouse at the end of the predefined period.

12. Method according to claim 11, wherein the method further comprises:
g) receiving fresh broiler chickens which are one, two, three or four days old in the first compartment while step e) is performed and repeating steps c) - f) for said fresh broiler chickens.

13. Method according to claim 12, wherein the method further comprises: h) cleaning and disinfecting the first compartment after step d) and before step g).

14. Method according to claim 13, wherein the method further comprises:
i) cleaning and disinfecting the second compartment after step f) and before step d) performed on said fresh broiler chickens.

15. Method according to any of the claims 11 - 14, wherein the predefined period is 6 weeks.
